# EUROPEAN PATENT SPECIFICATION

(11) **EP 1 700 385 B1**
(45) Date of publication and mention of the grant of the patent: **15.10.2008**
(21) Application number: 04814215.2
(22) Date of filing: 15.12.2004
(51) Int. Cl.: H04B 1/24

(54) **A TIME SIGNAL PERIPHERAL**
ZEITSIGNAL-PERIPHERIEEINRICHTUNG
PERIPHERIQUE DE SIGNAUX TEMPORELS

(30) Priority: 24.12.2003 US 746590
(43) Date of publication of application: 13.09.2006
(73) Proprietor: Microchip Technology Incorporated, Chandler, AZ 85224-6199 (US)
(72) Inventor: LOURENS, Ruan, Chandler, AZ 85248 (US); CHAFFEE, Douglas, LeRoy, Queens Creek, AZ 85242 (US)
(74) Representative: Grubert, Andreas
(86) International application number: PCT/US2004/042004
(87) International publication number: WO 2005/067155

(56) References cited:
- DE-A1- 3 144 321
- DE-A1- 3 733 967
- DE-A1- 4 227 502
- US-B1- 6 560 166
- PATENT ABSTRACTS OF JAPAN vol. 2000, no. 22, 9 March 2001 (2001-03-09) & JP 2001 148722 A (OKI ELECTRIC IND CO LTD), 29 May 2001 (2001-05-29)

## Description

The present invention relates generally to devices using radio time signals for accurately setting time, and more particularly to a time signal peripheral having a radio receiver and a digital processor.

The Time and Frequency Division of the National Institute of Standards and Technology (NIST) broadcasts time information, traceable to an atomic time standard, that is used as a time measurement standard. Various radio frequencies are used to transmit this time standard. The NIST radio station WWVB transmits at a very low frequency (VLF) of 60 kHz and effectively distributes standard time information to better than one second throughout the North American continent. Other VLF sites transmitting time standards have reception coverage mainly in the far east - JJY (Japan) and Europe - MSF (UK).

The NIST radio stations (*e.g*., WWV, WWVH, WWVB) are continuously being used for both precise frequency and time calibration, The demand for precise frequency and time calibration is constantly growing as manufacturers continue to create new, lower cost products, in an effort to place "Atomic Time" in every home and office. However, acceptance of highly accurate and automatically set time appliances is greatly dependent upon cost and ease in implementation. Integrated circuit technologies have reduced the cost of time measurement, recording and display systems, *e.g*.*,* digital clocks, parking meters, *etc*. However, complex and expensive receiving equipment is presently used to receive the time signals from the NIST radio stations. US 6,560,166 for example discloses an application using such receiving equipment.

Apparatus and systems requiring accurate time information may be for example, but not limited to, clocks, time of use utility meters, traffic lights; bus, train and plane scheduling apparatus; speed measuring instruments used in combination with global positioning satellite (GPS) devices, timers, parking meters, and the like.

Therefore, what is needed is a low cost time signal peripheral having a radio receiver and digital processor that can receive, decode and store the precise time from the NIST radio stations and the like, and make the precise time available as decoded time information.

The invention overcomes the above-identified problems as well as other shortcomings and deficiencies of existing technologies by the features defined in the independent claims. The dependent claims characterize further enhancements. For example, a time signal peripheral can be provided comprising a radio receiver and a digital processor for receiving, decoding and storing time information from time signals, *e.g*., WWV, WWVH, WWVB (USA), JJY (Japan), MSF (Europe) and the like. The digital processor, *e.g*., microcontroller, microprocessor, programmable logic array (PLA), application specific integrated circuit (ASIC), digital signal processor (DSP) and the like, may control the radio receiver and decode the time information from the received time signal. The radio receiver may be a super-regenerative receiver, a preferred embodiment of which is more fully described in commonly owned co-pending United States Patent Application Serial Number 10/670,619, filed September 25, 2003, entitled "Q-Quenching Super-Regenerative Receiver," by Ruan Lourens. The radio receiver may be a direct conversion receiver, preferred embodiments of which are more fully described in commonly owned co-pending United States Patent Application Serial Number 10/736,372, filed December 15, 2003, entitled "A Time Signal Receiver and Decoder", by Ruan Lourens, Layton W. Eagar and Russell Eugene Cooper.

In accordance with exemplary embodiments of the present invention, a time signal radio receiver provides demodulated time signal information to a digital processor which may decode the time information in the time signal and then store the decoded time information. The radio receiver provides a demodulated envelope of a received time signal to the digital processor. The digital processor decodes this demodulated signal to produce the time information. In addition, the digital processor may control the characteristics of the radio receiver to further improve reception performance thereof.

The time signal peripheral may be used to supply accurate time information to apparatus and systems requiring the determination of accurate time(s), *e.g*., clocks, time of use utility meters, traffic lights; bus, train and plane scheduling apparatus; speed measuring instruments used in combination with global positioning satellite (GPS) devices, timers, parking meters, and the like.

The present invention may be fabricated in one or more integrated circuit dice un-packaged on a leadframe or substrate, or encapsulated in a plastic, epoxy and/or ceramic integrated circuit package, *e.g*., PDIP, SOIC, MSOP, TSSOP, QSOP and the like.

A technical advantage of the present invention is using a physically small magnetic coil antenna resonant in the low frequency and medium frequency reception bands. Another technical advantage is fabricating the receiver in an integrated circuit. Still another technical advantage is adding input buffering stages so as to further reduce radiated noise from the receiver circuit. Another technical advantage is low power operation. Yet another technical advantage is efficient detection of digitally modulated data signals, *e.g*., WWVB. Yet another technical advantage is a low cost integrated circuit solution for apparatus and systems requiring precise time.

Features and advantages of the invention will be apparent from the following description of the embodiments, given for the purpose of disclosure and taken in conjunction with the accompanying drawing.

A more complete understanding of the present disclosure and advantages thereof may be acquired by referring to the following description taken in conjunction with the accompanying drawing, wherein:
Figure 1 illustrates schematic block diagram of a time signal peripheral having a receiver demodulator/decoder and time register(s), according to an exemplary embodiment of the present invention;
Figure 2 illustrates a schematic block diagram of a time signal peripheral having a radio receiver and a digital processor, according to the exemplary embodiment of the present invention;
Figure 3 illustrates a schematic block diagram of a time signal receiver and signal demodulator in combination with digital decoders, according to another exemplary embodiment of the present invention; and
Figure 4 illustrates the WWVB time code format.

While the present invention is susceptible to various modifications and alternative forms, specific exemplary embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

Referring now to the drawings, the details of exemplary embodiments of the present invention are schematically illustrated. Like elements in the drawing will be represented by like numbers, and similar elements will be represented by like numbers with a different lower case letter suffix.

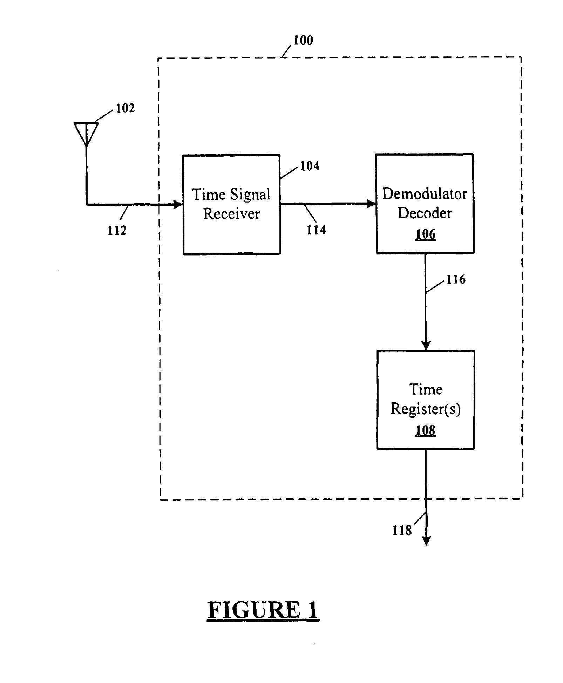

Referring to Figure 1, depicted is a schematic block diagram of a time signal peripheral having a time signal radio receiver, demodulator/decoder, and a time register(s), according to an exemplary embodiment of the present invention. A time signal, *e.g*., WWV, WWVH, WWVB (USA); JJY (Japan), MSF (UK) and the like, may be received on antenna 102, the received time signal 112 is coupled to an input of a time signal receiver 104 which separates the time signal from other unwanted signals and amplifies the desired time signal sufficiently for demodulation and decoding thereof. An amplified time signal 114 is applied to a demodulator/decoder 106 which demodulates the time signal information from the time signal and decodes the time signal information into useful accurate time. The decoded time signal information 116 may be stored in a time register(s) 108 for use by external devices (not shown). Accurate time information is available on an output 118 of the time register(s) 108. The time signal peripheral of the present invention may be fabricated on an integrated circuit die or dice, generally represented by the numeral 100. The die or dice may be on leadframe, un- packaged or encapsulated in an integrated circuit package.

A more detailed example of a time signal receiver 104 and/or demodulator/decoder 106 may be a super-regenerative receiver, a preferred embodiment of which is more fully described in commonly owned co-pending United States Patent Application Serial Number 10/670,619, filed September 25, 2003, entitled "Q-Quenching Super-Regenerative Receiver," by Ruan Lourens. The radio receiver also may be a direct conversion receiver, preferred embodiments of which are more fully described in commonly owned co-pending United States Patent Application Serial Number 10/736,372, filed December 15, 2003, entitled "A Time Signal Receiver and Decoder" by Ruan Lourens, Layton W. Eagar and Russell Eugene Cooper, wherein the aforementioned patent applications are hereby incorporated by reference herein for all purposes.

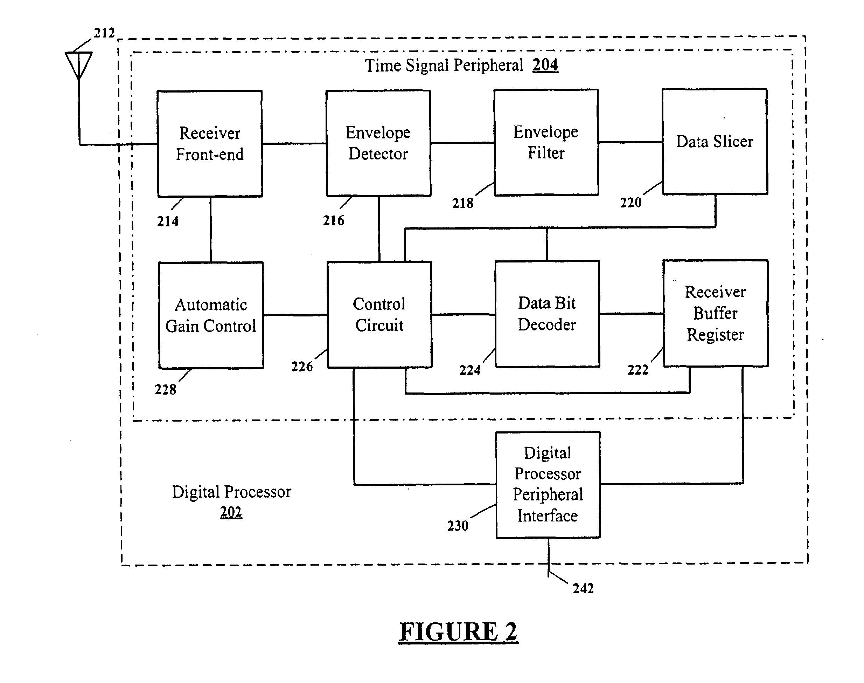

Referring to Figure 2, depicted is a schematic block diagram of a time signal peripheral and digital processor, according to an exemplary embodiment of the present invention. A time signal peripheral 204 may comprise a receiver front-end 214 coupled to an antenna 212, a envelope detector 216 coupled to an output of the receiver front end 214, an envelope filter 218 coupled to a output of the envelope detector 216, a data slicer 220 coupled to an output of the envelope filter 218, a control circuit 226 and data bit decoder 224 coupled to an output of the data slicer 220, automatic gain control 228 coupled to an output of the control circuit 226, and a receiver buffer register 222 coupled to an output of the data bit decoder 224.

A digital processor 202 may be coupled to the time signal peripheral 204 with, for example but not limited to, a digital processor peripheral interface 230. The peripheral interface 230 may have an output 242 adapted to supply time information determined from the time signal received on the antenna 212.

The digital processor 202 may access the control circuit 226 through the peripheral interface 230, or may connect to the control circuit 226 directly. The control circuit 226 may control the automatic gain control 228 based upon signal levels at the envelope detector 216. The automatic gain control 228 may control the sensitivity of the receiver front-end to prevent signal overload thereof. The control circuit 226 may control the data bit decoder 224 and the receiver buffer register 222 based upon information from the data slicer 220. The control circuit 226 may control when time information is transferred from the receiver buffer register 222 to the peripheral interface 230.

In one exemplary embodiment of the invention, the time signal peripheral 204 may be fabricated on an integrated circuit die (not shown) and function independently from the digital processor 202. The digital processor may be an industry standard processor, *e.g*., microcontroller, microprocessor, programmable logic array (PLA), application specific integrated circuit (ASIC), digital signal processor (DSP) and the like.

In another exemplary embodiment of the invention, the digital processor 202 may perform the functions of the control circuit 226, thus eliminating the need for the control circuit 226. In a further exemplary embodiment of the invention the digital processor 202 and the time signal peripheral 204 may be fabricated on an integrated circuit die or dice and may be un-encapsulated on a leadframe or substrate, or may be encapsulated in an integrated circuit package, *e.g*., PDIP, SOIC, MSOP, TSSOP, QSOP and the like.

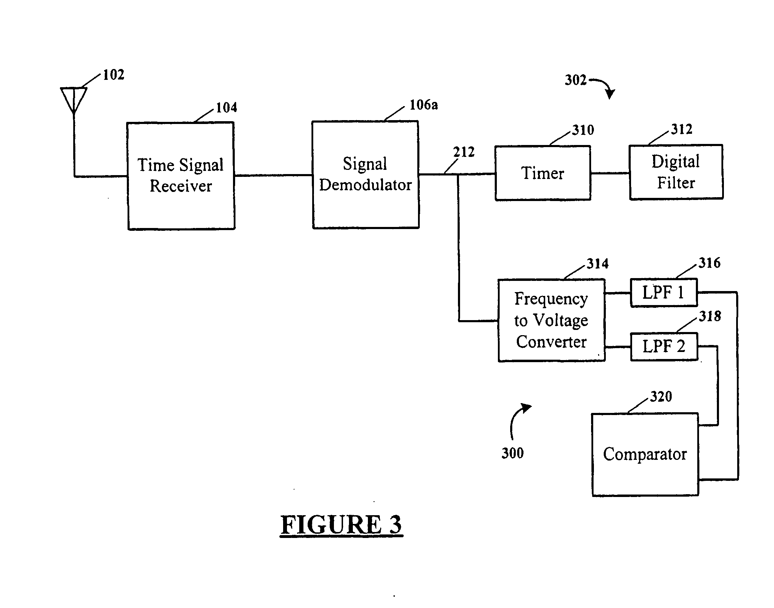

Referring to Figure 3, depicted is a schematic block diagram of the time signal receiver 104 in combination with digital decoders, according to another exemplary embodiment of the present invention. A time signal is received on the antenna 102 and the desired time signal is amplified in the time signal receiver 104. The amplified time signal may be detected or demodulated with the signal demodulator 106a and the demodulated/detected time signal may be coupled to a mixed signal decoder 300 and/or a digital decoder 302. The mixed signal decoder 300 may comprise a frequency-to-voltage converter 314, a first low pass filter 316, a second low pass filter 318, and a voltage comparator 320. The digital decoder 302 may comprise a timer 310 and a digital filter 312. The time signal receiver 104 may receive and the signal demodulator 106a may demodulate frequency modulated signal information and/or amplitude modulated signal information which may be processed by the mixed signal decoder 300 and/or the digital decoder 302, respectively.

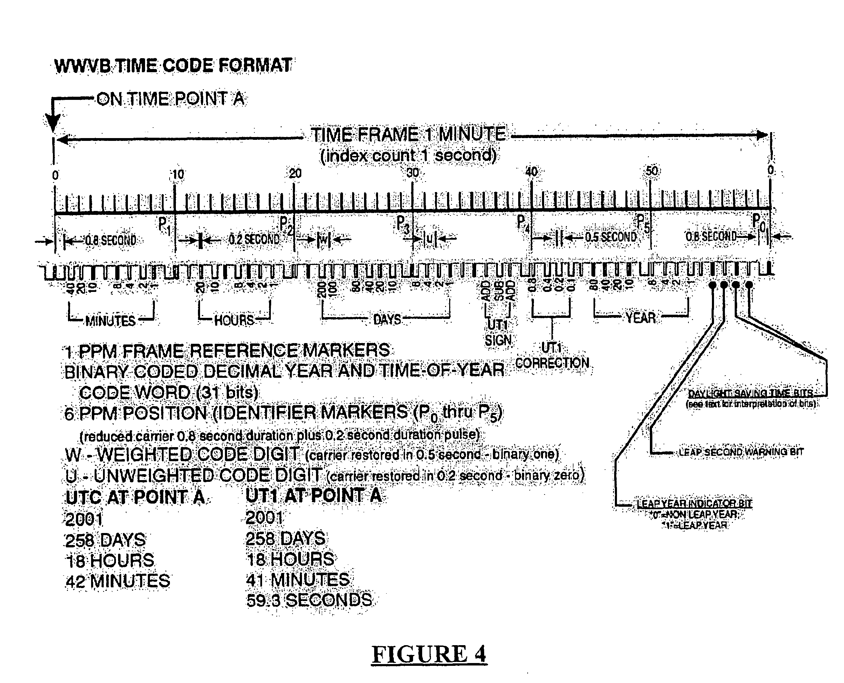

Referring to Figure 4, depicted is the WWVB time code format. The receiver 104 receives the WWVB time coded signal at 60 kHz and the demodulator/decoder 106 demodulates and decodes this amplitude modulated (AM) digital time code format. The demodulator/decoder 106 demodulates the WWVB time code format and detects the demodulated pulse amplitudes and timing of the pulses.

The invention, therefore, is well adapted to carry out the objects and attain the ends and advantages mentioned, as well as others inherent therein. While the invention has been depicted, described, and is defined by reference to exemplary embodiments of the invention, such a reference does not imply a limitation on the invention, and no such limitation is to be inferred. The invention is capable of considerable modification, alternation, and equivalents in form and function, as will occur to those ordinarily skilled in the pertinent arts and having the benefit of this disclosure. The depicted and described embodiments of the invention are exemplary only, and are not exhaustive of the scope of the invention.

## Claims

1. An apparatus for receiving and decoding a radio frequency time signal, comprising on an integrated circuit package:
a time signal peripheral (104; 204) for receiving a time signal;
a processor and peripheral interface (230) coupled to the time signal peripheral (10; 214); and
a digital processor (202) coupled to the processor and peripheral interface (230);
wherein the time signal peripheral (104; 204) comprises:
a receiver front-end (214) coupled to an antenna (212);
a envelope-detector (216) coupled to an output of the receiver front end (214),
an envelope filter (218) coupled to an output of the envelope detector (216),
a data slicer (220) coupled to an output of the envelope filter (218),
a data bit decoder (224) coupled to an output of the data slicer (220),
a time register (222) coupled to an output of the data bit decoder (224), and
a control circuit (226) coupled to the envelope detector (216), data slicer (22)), data bit decoder (224) and time register (222);
wherein the time signal peripheral (104; 204), the digital processor (202), and the processor and peripheral interface (230) are fabricated on an integrated circuit die; and wherein the time signal peripheral (104; 204) is programmable through said control circuit to determine time information from the received time signal and stores the time information in the time register (222).

2. The apparatus of claim 1, further comprising the integrated circuit die being packaged in an integrated circuit package.

3. The apparatus of claim 2, wherein the integrated circuit package is selected from the group consisting of PDIP, SOIC, MSOP, TSSOP, and QSOP.

4. The apparatus of claim 1, wherein the digital processor (202) is selected from the group consisting of a microcontroller, a microprocessor, a programmable logic array (PLA), an application specific integrated circuit. (ASIC) and a digital signal processor (DSP).

5. The apparatus of claim 1, wherein the time signal peripheral (204), the processor and peripheral interface (230) and the digital proccessor (202)are used in a timing system, wherein the timing system is selected from the group consisting of clocks, time of use utility meters, traffic lights; bus, train and plane scheduling apparatus; speed measuring instruments used in combination with global positioning satellite (GPS) devices, timers, and parking meters.

## Patentansprüche

1. Vorrichtung zum Empfangen und Dekodieren eines Radiofrequenzzeitsignals, die in einem Gehäuse einer integrierten Schaltung aufweist:
eine Zeitsignalperipherieeinrichtung (104; 204) zum Empfangen eines Zeitsignals,
einen Prozessor und eine Peripherieeinrichtungsschnittstelle (230), die mit der Zeitsignalperipherieeinrichtung (104; 214) verbunden sind, und
einen digitalen Prozessor (202), der mit dem Prozessor und der Peripherieeinrichtungsschnittstelle (230) verbunden ist,
wobei die Zeitsignalperipherieeinrichtung (104; 204) aufweist :
ein mit einer Antenne (212) verbundenes Empfänger-Front-End (214),
einen mit einem Ausgang des Empfänger-Front-Ends (214) verbundenen Hüllkurvendetektor (216),
ein mit einem Ausgang des Hüllkurvendetektors (216) verbundenes Hüllkurvenfilter (218),
eine mit einem Ausgang des Hüllkurvenfilters (218) verbundene Datenabkappeinheit (220),
einen mit einem Ausgang der Datenabkappeinheit (220) verbundenen Datenbitdekoder (224),
ein mit einem Ausgang des Datenbitdekoders (224) verbundenes Zeitregister (222), und
eine mit dem Hüllkurvendetektor (216), der Datenabkappeinheit (220), dem Datenbitdekoder (224) und dem Zeitregister (222) verbundene Steuerschaltung (226),
wobei die Zeitsignalperipherieeinrichtung (104; 204), der digitale Prozessor (202) und der Prozessor und die Peripherieeinrichtungsschnittstelle (230) auf einem Chip einer integrierten Schaltung hergestellt sind; und wobei die Zeitsignalperipherieeinrichtung (104; 204) durch die Steuerschaltung programmierbar ist, um Zeitinformation aus dem empfangenen Zeitsignal zu bestimmen und die Zeitinformation in dem Zeitregister (222) speichert.

2. Vorrichtung nach Anspruch 1, weiterhin aufweisend, dass der Chip der integrierten Schaltung im Gehäuse einer integrierten Schaltung eingepackt ist.

3. Vorrichtung nach Anspruch 2, wobei das Gehäuse der integrierten Schaltung ausgewählt wird aus der Gruppe bestehend aus PDW, SOIC, MSOP, TSSOP und QSOP.

4. Vorrichtung nach Anspruch 1, wobei der digitale Prozessor (202) ausgewählt ist aus der Gruppe bestehend aus einem Mikrocontroller, einem Mikroprozessor, einer programmierbaren Logik-Anordnung (PLA), einem anwendungsspezifischen integrierten Schaltkreis (ASIC) und einem digitalen Signalprozessor (DSP).

5. Vorrichtung nach Anspruch 1, wobei die Zeitsignalperipherieeinrichtung (204), der Prozessor und die Peripherieeinrichtungsschnittstelle (230) und der digitale Prozessor (202) in einer Zeitsteuerungsanordnung verwendet werden, wobei die Zeitsteuerungsanordnung ausgewählt wird aus der Gruppe bestehend aus Uhren, Geräten zur Messung der verwendeten Nutzungszeit und Ampeln; Vorrichtungen zur Zeitplanung von Bus, Zug und Flugzeug; in Kombination mit Global Positioning Satellite (GPS) Anordnungen verwendeten Geschwindigkeitsmessinstrumenten, Zeitschaltuhren und Parkuhren.

## Revendications

1. Appareil pour recevoir et décoder un signal horaire radioélectrique, comprenant un boîtier de circuit intégré :
un périphérique de signal horaire (104 ; 204) destiné à recevoir un signal horaire ;
une interface processeur et périphérique (230) couplée au périphérique de signal horaire (10 ; 214) ; et
un processeur numérique (202) couplé à l'interface processeur et périphérique (230) ;
dans lequel le périphérique de signal horaire (104 ; 204) comprend :
une extrémité frontale de récepteur (214) couplée à une antenne (212) ;
un détecteur d'enveloppe (216) couplé à une sortie de l'extrémité frontale de récepteur (214),
un filtre d'enveloppe (218) couplé à une sortie du détecteur d'enveloppe (216),
un éminceur de données (220) couplé à une sortie du filtre d'enveloppe (218),
un décodeur de bits de données (224) couplé à une sortie de l'éminceur de données (220),
un registre d'horloge (222) couplé à une sortie du décodeur de bits de données (224), et
un circuit de commande (226) couplé au détecteur d'enveloppe (216), à l'éminceur de données (220), au décodeur de bits de données (224) et au registre d'horloge (222) ;
dans lequel le périphérique de signal horaire (104 ; 204), le processeur numérique (202) et l'interface processeur et périphérique (230) sont fabriqués sur un dé de circuit intégré ; et dans lequel le périphérique de signal horaire (104 ; 204) est programmable par le biais dudit circuit de commande pour déterminer des informations horaires à partir du signal horaire reçu et mémorise les informations horaires dans le registre d'horloge (222).

2. Appareil selon la revendication 1, comprenant en outre le dé de circuit intégré conditionné dans un boîtier de circuit intégré.

3. Appareil selon la revendication 2, dans lequel le boîtier de circuit intégré est choisi dans le groupe comprenant le PDIP, le SOIC, le MSOP, le TSSOP et le QSOP.

4. Appareil selon la revendication 1, dans lequel le processeur numérique (202) est choisi dans le groupe comprenant un microcontrôleur, un microprocesseur, un réseau logique programmable (PLA), un circuit intégré à application spécifique (ASIC) et un processeur de signal numérique (DSP).

5. Appareil selon la revendication 1, dans lequel le périphérique de signal horaire (204), l'interface processeur et périphérique (230) et le processeur numérique (202) sont utilisés dans un système de synchronisation, dans lequel le système de synchronisation est choisi dans le groupe comprenant les horloges, les compteurs de temps d'utilisation à usage général, les feux de signalisation ; les appareils de planification de bus, trains et avions ; les instruments de mesure de vitesse utilisés en combinaison avec les dispositifs de positionnement global par satellite (GPS), les temporisateurs et les parcmètres.
